# EUROPEAN PATENT APPLICATION

(11) **EP 1 909 209 A1**
(43) Date of publication of application: **09.04.2008**
(21) Application number: 07016017.1
(22) Date of filing: 14.08.2007
(51) Int. Cl.: G06F 21/00, G07F 7/10, H04L 29/06

(54) **Authentication system and method**

(30) Priority: 04.10.2006 JP 2006272733
(71) Applicant: Hitachi, Ltd., Chiyoda-ku Tokyo 100-8280 (JP)
(72) Inventor: Uchiyama, Hiroki, Chiyoda-ku Tokyo 100-8220 (JP); Umezawa, Katsuyuki, Chiyoda-ku Tokyo 100-8220 (JP); Kobayashi, Ken, Chiyoda-ku Tokyo 100-8220 (JP); Matsumoto, Kenji, Chiyoda-ku Tokyo 100-8220 (JP)
(74) Representative: Strehl Schübel-Hopf & Partner

(57) **Abstract**

To provide a novel authentication scheme to prevent PIN information from being exposed to the outside of a data carrier, without modifying an existing application for authentication management. The data carrier includes means for generating PIN information therein; a PIN storage unit for storing the generated PIN information with respect to the use of a service application; an authentication information storage unit for storing information unique to a user; an authentication application unit for authenticating the user by referring to the authentication information stored in the authentication information storage unit; means for verifying the PIN information stored in the PIN storage unit according to the authentication result by the authentication application; and a service application unit for performing a service according to the result of the verification of the PIN information by the verification means.

## Description

### BACKGROUND OF THE INVENTION

The-present invention relates to an authentication system and a method of the same. More particularly the invention relates to authentication in a system using a data carrier such as a smart card, an authentication system for executing a service application and the like according to the authentication result, a data carrier for performing authentication, and an authentication method.

When a credit, a bank, or other institution provides a service to a user using a smart card, the identity of the user is typically verified by authentication by PIN (Personal Identification Number) in order to prevent an unauthorized third party from using the service.

With respect to authentication of PIN, the PIN would be individually managed for each service. In this case, however, the user should manage plural PINs, thus posing a problem from the standpoint of availability. Further, there could be some users who would like to set the same PIN for all services in order to save the trouble of management. Even in such a case, however, it is necessary to authenticate the PIN every time at the start of each service, and there still remains a problem from the standpoint of availability.

Thus, for example, as disclosed in GlobalPlatform Inc., "Card Specification Version 2.1.1", [online], March, 2003, GlobalPlatform Inc., p. 84
<URL:http://www.globalplatform.org/specificationview.asp?id =archived>, there is known a technology that a PIN is managed by a card manager for managing an entire smart card so that the verification status of the PIN of the card manager is referred to at each service, which eliminates the necessity of the user to input PIN each time, thereby improving the user's availability.

Recently, security has been increasingly concerned and there is a demand for more sophisticated authentication using biometrics such as fingerprint, vein, and iris, instead of the PIN authentication, in order to authenticate a user in each service. However, existing service applications in a smart card have only supported the PIN authentication for PINs managed by the card manager and by themselves. For this reason it is necessary to incorporate a new authentication function into the service applications in order to use a new authentication method.

As disclosed in JP-A No. 203213/2003 (Document 1), there is known a technology that meets the demand by introducing a new authentication method into a service application in such a way that a smart card is provided with an authentication application for performing an authentication process such as biometric authentication and with an authentication management application for managing the authentication results performed in the smart card in an integrated fashion. The authentication management application manages the results of the authentication process performed by the authentication application. The service application refers to authentication result flags managed by the authentication management application.

Further, as disclosed in US. Patent No. 2004/0034784A1 (Document 2), there is known a technology of managing PIN information in a smart card in a server, setting the PIN information managed by the server to the smart card when a biometric authentication is successful in the server, and then providing a service by use of the set PIN.

### SUMMARY OF THE INVENTION

However, according to the technology of Document 1, modification of the service application is necessary as the service application should refer to the authentication results managed by the authentication management application. Further, according to the technology of Document 2, in the case in which the PIN is transmitted to the smart card from the server when the biometric authentication is successful, the PIN data can be sniffed as it is exposed to the outside of the smart card although the communication path is encrypted.

The present invention is able to perform authentication of a new scheme without modifying an existing application for authentication management.

Further the present invention provides an authentication system and method capable of authenticating a user without exposing the PIN information to the outside of a data carrier thereby executing an application of a service more securely, as well as a data carrier.

A data carrier according to the present invention is preferably a data carrier used for receiving a service provided from a service provider device. The data carrier includes a PIN storage unit for storing PIN information prepared in advance with respect to the use of a service application; an authentication information storage unit for storing information unique to a user; an authentication application unit for authenticating the user by referring to the authentication information stored in the authentication storage unit; means for verifying the PIN information stored in the PIN storage unit; and a service application unit for performing a service according to the result of the verification of the PIN information by the verification means.

In a preferred example, the authentication information storage unit stores the biometric information of the user, and the authentication application unit performs an authentication process by referring to the biometric information.

Further, preferably the data carrier includes plural service application units, and a data storage unit for storing data used in the plural service applications.

Further, preferably the data carrier also includes a PIN management application unit having means for generating the PIN information therein. The PIN storage unit stores the PIN information generated in the PIN management application unit.

Further, preferably the generation means of the PIN management application unit generates a random number and stores the generated random number into the PIN storage unit as PIN information.

An authentication system according to the present invention is preferably an authentication system for providing a service by authenticating a user and transmitting a command to a data carrier owned by the user, from a service provider device. The service provider device includes a communication unit for transmitting and receiving data; a command generation unit for generating a command to be transmitted to the data carrier; and a service provision unit for providing the service. The data carrier includes a PIN storage unit for storing PIN information prepared in advance with respect to the use of a service application; a PIN management application unit for managing the PIN information; an authentication information storage unit for storing information unique to the user; an authentication application unit for authenticating the user by referring to the authentication information stored in the authentication information storage unit; means for verifying the PIN information stored in the PIN storage unit according to the authentication result by the authentication application; and a service application unit for performing the service according to the result of the verification of the PIN information by the verification means.

In a preferred example, the service provider device transmits an authentication request command to the authentication application unit of the data carrier. The authentication application unit performs an authentication process and transmits the authentication result to the PIN management application unit. When determining that the authentication is successful from the received authentication result, the PIN management application unit reads the PIN information stored in the PIN storage unit, and verifies the PIN information stored in the PIN storage unit by the verification means. The service provider device transmits a service start request to the service application unit. The service application unit verifies the PIN status and starts a service according to the verification result.

Further, the present invention is understood as a management method of PIN information.

That is, it is a method for generating and managing PIN information used in a smart card. The smart card includes a PIN storage unit for storing PIN information prepared in advance with respect to a service application; a PIN management application unit having means for generating the PIN information, and managing the generated PIN information; an authentication information storage unit for storing information unique to a user; an authentication application unit for authenticating the user by referring to the authentication information stored in the authentication information storage unit; means for verifying the PIN information stored in the PIN storage unit according to the authentication result by the authentication application; and a service application unit for performing a service according to the result of the verification of the PIN information by the verification means. In the management method of the PIN information of the smart card, an initialization request command is transmitted to the PIN management application unit from a card issuer device. Then, the PIN management application unit generates the PIN information by the generation means, and when determining that the PIN information is properly set, the PIN management application unit stores the PIN information into the PIN storage unit.

In a preferred example, in transmission of the initialization command to the PIN management application unit, the card issuer device transmits an authentication holding time for holding the authentication result in the PIN management application unit as well as key data used for verifying a signature by the PIN management application unit. The PIN management application unit stores the received authentication holding time into an authentication holding time storage unit, and stores the received key data into a key storage unit.

An authentication method according to the present invention is preferably an authentication method for authenticating a user and allowing service provision according to the result of the authentication by use of a data carrier owned by the user. The authentication method includes the following steps: generating PIN information in the data carrier; storing the generated PIN information in a storage unit; authenticating the user by referring to the authentication information of the user previously stored in the storage unit, when the service is used; verifying the PIN information stored in the PIN storage unit when it is determined that the user is properly authenticated as a result of the authentication; and allowing the service according to the result of the verification of the PIN information.

In a preferred example, the biometric information of the user is used as the authentication information and a random value is generated as the PIN information.

According to the present invention, it is possible to adopt a new authentication scheme such as biometric authentication without modifying an existing service application for authentication management, and to use the service application in association with the authentication result. Further, the used PIN information is not exposed to the outside from a data carrier, so that it is possible to provide a service more securely. In addition, there is no need for the user to keep in mind the PIN information of the card manager to be actually used.

### BRIEF DESCRIPTION OF THE DRAWINGS

Fig. 1 is a block diagram showing a configuration example of a smart card authentication system according to an embodiment;
Fig. 2 is a block diagram showing a hardware configuration of a smart cart 10 in the smart card authentication system;
Fig. 3 is a block diagram showing a hardware configuration of a terminal 20 in the smart card authentication system;
Fig. 4 is a block diagram showing a hardware configuration of a service provider device 40 in the smart card authentication system;
Fig. 5 is a flowchart showing authentication process operations in the smart card, according to a first embodiment;
Fig. 6 is a flowchart showing authentication process operations in the smart card, according to a second embodiment;
Fig. 7 is a flowchart showing authentication process operations in the smart card, according to the second embodiment;
Fig. 8 is a view showing a structure of time data used in the second embodiment;
Fig. 9 is a flowchart showing a process with respect to a service start process based on the authentication process result of the smart card, according to a third embodiment; and
Fig. 10 is a flowchart showing process operations for initializing a PIN management application unit, according to an embodiment.

### DETAILED DESCRIPTION OF THE PREFERRED EMBODIMENTS

Hereinafter an embodiment of the present invention will be described with reference to the accompanying drawings.

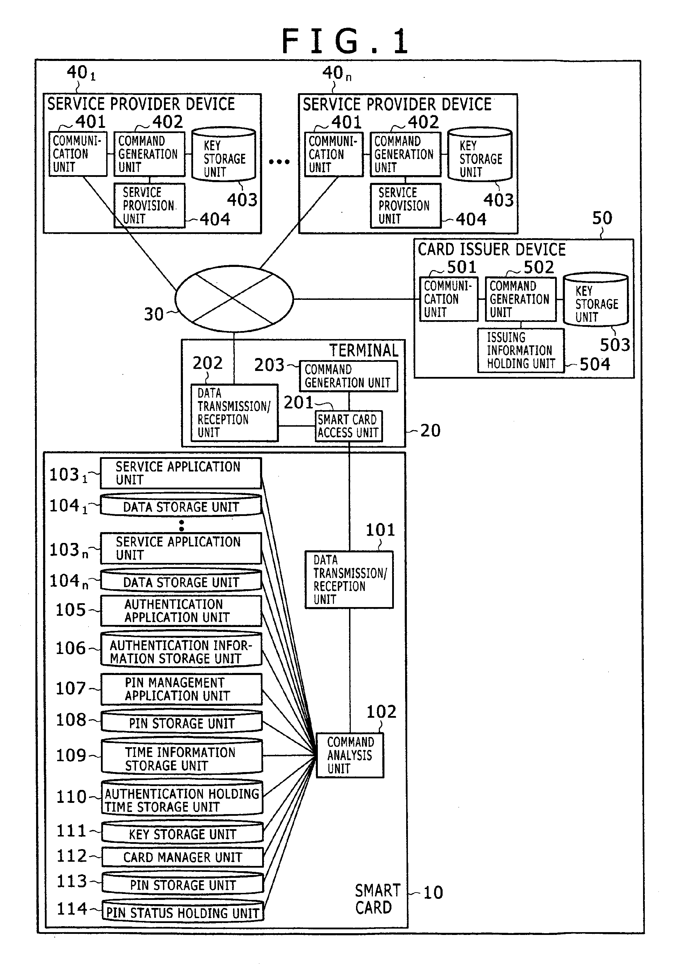

Fig. 1 is a block diagram showing an example of a smart card authentication system according to an embodiment.

The smart card authentication system is configured to include a terminal 20 for accessing a smart card 10; plural service provider devices 40₁ to 40ₙ (hereinafter also collectively denoted by reference numeral 40) for providing services; and a card issuer device 50 for issuing the smart card 10. All of the components are connected with each other through a network 30.

The smart card 10 has a function of receiving a command from the outside, performing a process based on the content of the received command, and returning the process result.

The smart cart 10 includes a data transmission/reception unit 101 for receiving a command and transmitting a process result; a command analysis unit 102 for analyzing the command; service application units 103₁ to 103ₙ (hereinafter also denoted by reference numeral 103) for performing a process according to the command; data storage units 104₁ to 104ₙ (hereinafter also denoted by reference numeral 104) for storing data to be used in the application units 103₁ to 103ₙ; an authentication application unit 105 for performing a biometric authentication process; an authentication information storage unit 106 for storing in advance authentication information (for example, biometric information) to be used as a matching target in the authentication application unit 105; a PIN management application unit 107 for managing PIN information of a card manager in the smart card; a PIN storage unit 108 for storing the PIN information to be used in the PIN management application unit 107; a time information storage unit 109 for storing time information to be used in the PIN management application unit 107; an authentication holding time storage unit 110 for storing an authentication holding time to be used in the PIN management application unit 107; a key storage unit 111 for storing a key for signature verification to be used in the PIN management application unit 107; a card manager unit 112 for managing applications and status and the like in the smart card 10; a PIN storage unit 113 for storing in advance PIN information to be used for PIN verification in the card manager unit 112; and a PIN status holding unit 114 for holding the PIN status to be used in the card manager unit 112.

In the embodiment, the PIN information to be used for PIN verification is stored in advance in the PIN storage unit 108, instead of being input by a user each time the user receives a service as in the past. This eliminates the need for the user to input the PIN information for each service, so that there is no need for the user to keep in mind the PIN information corresponding to plural service applications. Further, the PIN information is stored in advance in the storage unit of the smart card, so that the PIN information will not be exposed to the outside of the card.

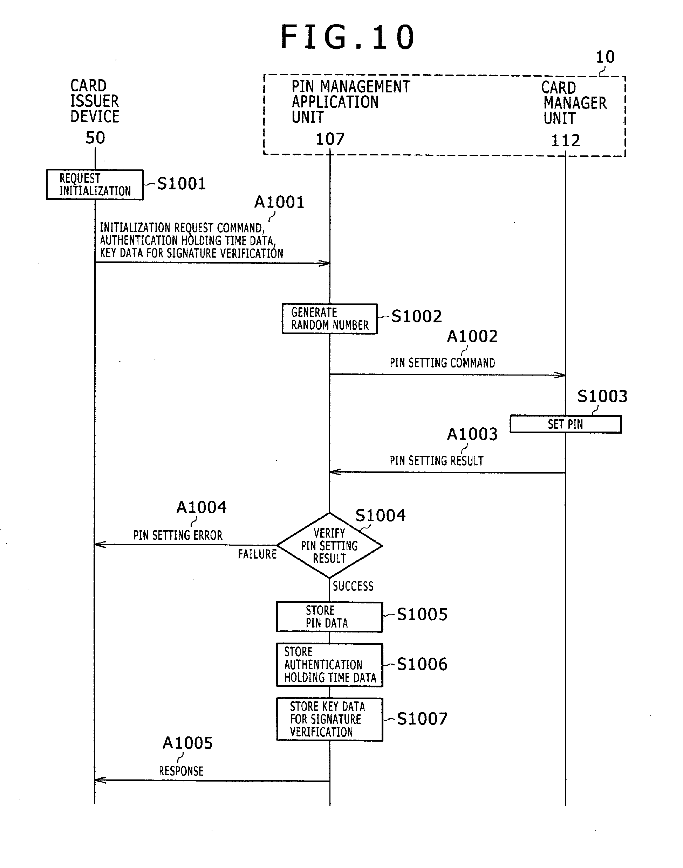

Incidentally, the PIN information is generated and stored in the PIN storage unit under the control of the initialization process by the card issuer device 50. The detail of the process will be described below with reference to Fig. 10.

Further, with respect to the plural service application units 103, for example, it may be assumed that the service application 103₁ is used as a service card of credit card company A, 103₂ as a service card of credit card company B... and 103ₙ as a service card of Y bank. Plural different services can be received with this single smart card 10. In such a case also, according to the embodiment, it is possible to support the biometric authentication that has been started to be used in different services, still without the need to modify the correspondence between an existing service application and PIN information used therein. The reason and process operations will be understood from the description below.

The terminal 20 is a device for transmitting and receiving data to and from the smart card 10, which is, for example, an automated teller machine (ATM) of a bank or a service terminal of a credit company. The terminal 20 includes a smart card access unit 201 for transmitting and receiving a command to and from the smart card 10; a data transmission/reception unit 202 for transmitting and receiving data with the network 30; and a command generation unit 203 for generating a command to be transmitted to the smart card 10.

The service provider device 40 is a device for providing a service to a user, which is, for example, a server of a credit company or bank and the like. The service provider device 40 includes a communication unit 401 for transmitting and receiving data with the network 30; a command generation unit 402 for generating a command to be transmitted to the smart card 10; a key storage unit 403 for storing a key to be used when the command is generated; and a service provision unit 404 for providing a service to the smart card 10.

The card issuer device 50 is a device for issuing the smart card, including a communication unit 501 for transmitting and receiving data with the network 30; a command generation unit 502 for generating a command to be transmitted to the smart card 10; a key storage unit 503 for storing a key to be used when the command is generated; and an issuing information holding unit 504 for holding the issuing information of the smart card 10.

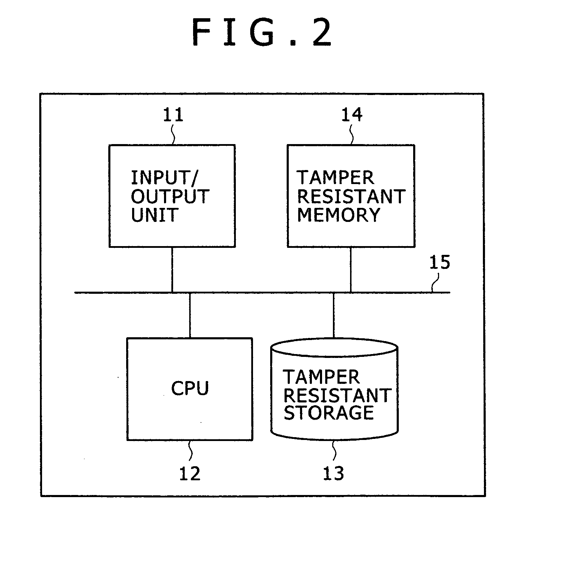

Fig. 2 shows a hardware configuration of the smart card 10.

The smart card 10 includes an input/output unit 11 for transmitting and receiving data with the terminal 20; a CPU 12 for performing various data processes; and a tamper resistant storage 13 for storing the biometric information, PIN information, key, and the like to be matching targets for authentication process as well as a tamper resistant memory 14. All of the components are connected to an internal communication line 15 such as a bus. These pieces of information, which are initially stored in the tamper resistant storage 13, are read into the tamper resistant memory 14 and are used for performing authentication process, verification, and the like.

Here, the form of the smart card is not limited to a card form such as a telephone card, but for example, a memory card form such as an MMC or SD card, as long as the card has the configuration shown in Fig. 2.

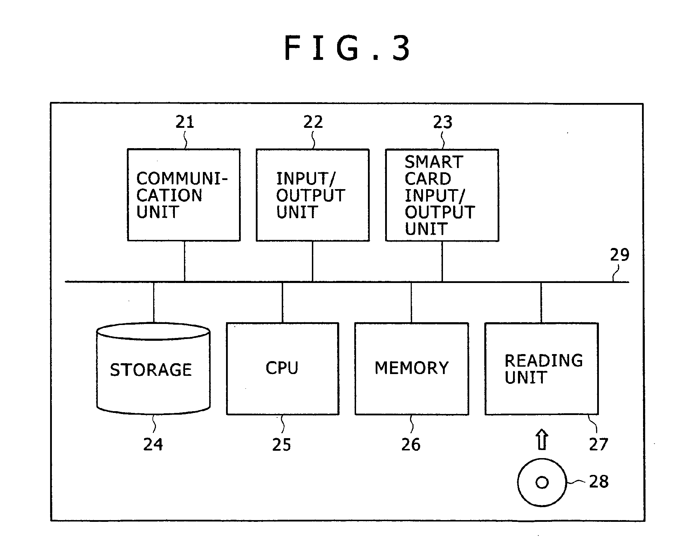

Fig. 3 shows a hardware configuration of the terminal 20.

The terminal 20, for example, is a personal computer equipped with a smart card reader. The terminal 20 includes a communication unit 21 for performing data communication with the network 30; an input/output unit 22 such as a keyboard and indicator operated by the user and the like; a smart card input/output unit 23 for transmitting and receiving data with the smart card 10; a storage 24 for storing various data; a CPU 25 for processing data; a memory 26 for storing programs and data; and a reading unit 27 for reading a medium 28 with the programs and data stored therein. All of the components are connected by an internal communication line 29 such as a bus.

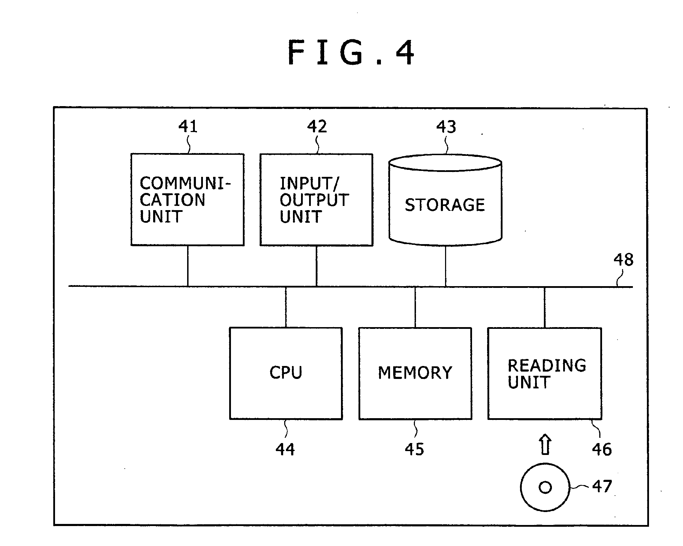

Fig. 4 shows a hardware configuration of the service provider device 40.

The service provider device 40, for example, a server of a credit company, includes a communication unit 41 for performing data communication with the network 30; an input/output unit 42 such as a keyboard and indicator; a storage 43 such as a hard disc; a CPU 44 for processing data for a service; a memory 45 for storing programs and data for process; and a reading unit 46 for reading a medium 47 with the programs and data stored therein. All of the components are connected by an internal communication line 48 such as a bus.

Incidentally, the card issuer device 50 has the same hardware configuration as that shown in Fig. 3. The card issuer device 50 communicates with the terminal 20 through the network 30, so that the smart card input/output unit 23 may not be included therein.

Next, the smart card authentication process according to the embodiment will be described. In the process operations described below, various operations for smart card authentication are performed by loading the programs stored in the storages of the devices into the memories respectively, and executing the programs by the CPUs respectively. Incidentally each program may be stored in each of the storages in advance, or may be loaded when needed in the storages of the devices or memories through other storage media that each of the devices can use or through a communication medium such as a network, a digital signal or a carrier wave.

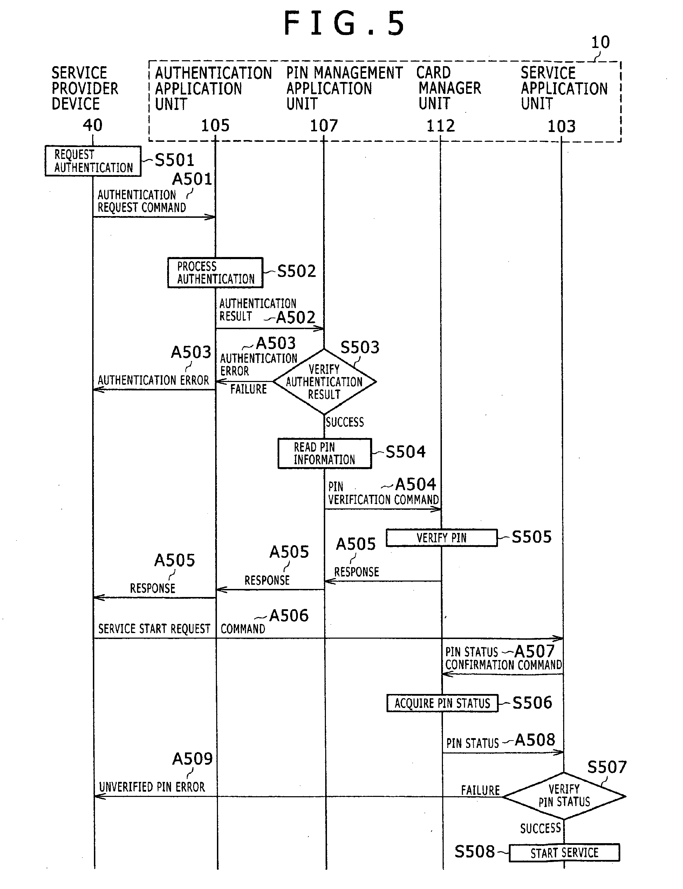

Fig. 5 is a flowchart showing an authentication process in the smart card.

The example shows a first embodiment of a case in which the authentication application unit 105 and service application unit 103 of the smart card 10 are associated.

First, the service provider device 40 performs an authentication request when desiring to perform an authentication process by the smart card (S501), and transmits an authentication request command (A501) to the authentication application unit 105 of the smart card 10. Here, the authentication request command includes data of the authentication information necessary for performing biometric authentication or other authentication methods. For example, the biometric information acquired for the authentication process by the terminal 20 is added to the authentication request command and is transmitted.

In the smart card 10, the authentication application unit 105 analyzes the received authentication request command, and performs the authentication process (S502). Here, the authentication process is a process for authenticating a service user, which means, for example, biometric authentication or other authentication methods. The process of authentication is not specifically limited. The authentication result (A502) is transmitted to the PIN management application unit 107.

The PIN management application unit 107 verifies the received authentication result (A502) (S503). As a result of the verification, when determining that the authentication is failed, the PIN management application unit 107 terminates the process by transmitting an authentication error (A503) to the service provider device 40 through the authentication application unit 105. On the other hand, when determining that the authentication is successful, the PIN management application unit 107 reads the PIN information stored in the PIN storage unit 108 (S504), and transmits a PIN verification command (A504) to the card manager unit 112. Here, the PIN verification command includes the PIN information read from the PIN storage unit 108.

Next, the card manager unit 112 performs PIN verification by checking the PIN information in the received PIN verification command against the PIN information previously stored in the PIN storage unit 113 (S505). As a result of the PIN verification, the card manager unit 112 returns a response (A505) indicating completion of the process to the service provider device 40 through the PIN management application unit 107 and the authentication application unit 105.

Upon receiving the response indicating completion of the process, the service provider device 40 transmits a service start request command (A506) to the service application unit 103. The service application unit 103 transmits a PIN status confirmation command (A507) to the card manager unit 112. The card manager unit 112 analyzes the received PIN status confirmation command, and acquires a PIN status by referring to the PIN status storage unit 114 (S506). Then, the card manager unit 112 transmits the PIN status (A508) to the service application unit 103.

The service application unit 103 verifies the received PIN status (S507). As a result of the verification, when determining that the PIN is unverified, the service application unit 103 transmits an unverified PIN error (A509) to the service provider device 40. On the other hand, when determining that the PIN is verified, the service application unit 103 starts the service (S508).

With the process as described above, it is possible to associate the authentication application unit 105 with the service application unit 103.

Incidentally, in the case in which one smart card 10 has plural service application units 103, the authentication process for the start of service by use of each service application unit 103ᵢ is the same as described above. Also in the case in which plural service provider devices 40 exist corresponding to the service application units 103, the authentication process associated with the service provision from each service provider device 40ⱼ is the same as described above.

Further, in'the case of the service provision by the smart card having the plural service application units 103, the authentication process by the authentication application unit 105 may be performed for each service, or may be performed only once at the first time. It is also possible for the PIN verification (S505) that a single piece of PIN information is commonly used in the plural service application units 103.

Further, according to the embodiment, even in the case in which a service application having only a function of referring to the PIN of the card manager as the user authentication function, is stored in the smart card, it is possible that the authentication process such as biometric authentication is first performed by the authentication application and then the authentication result is transmitted to the PIN management application.

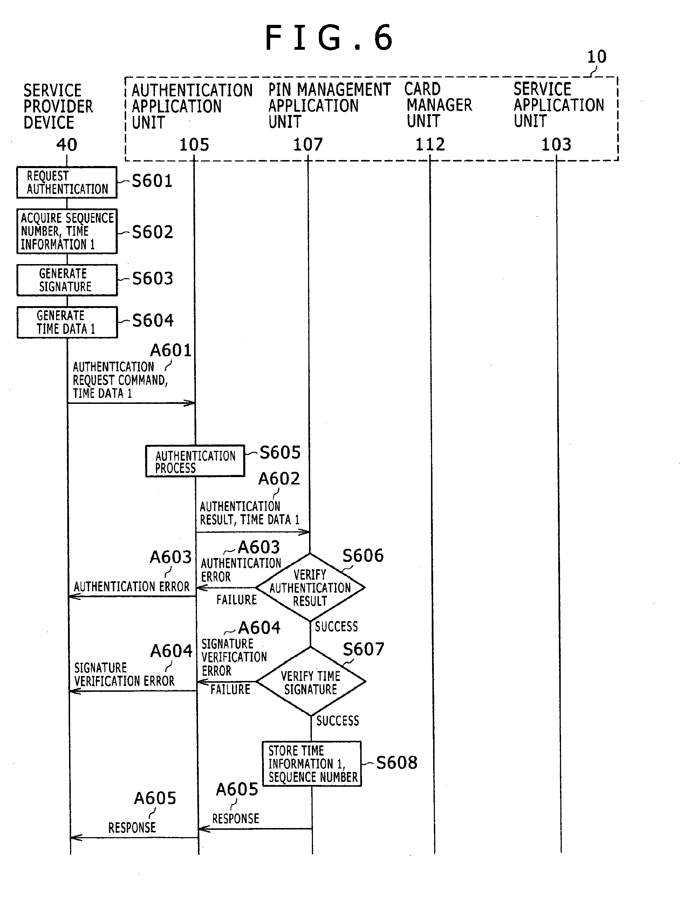

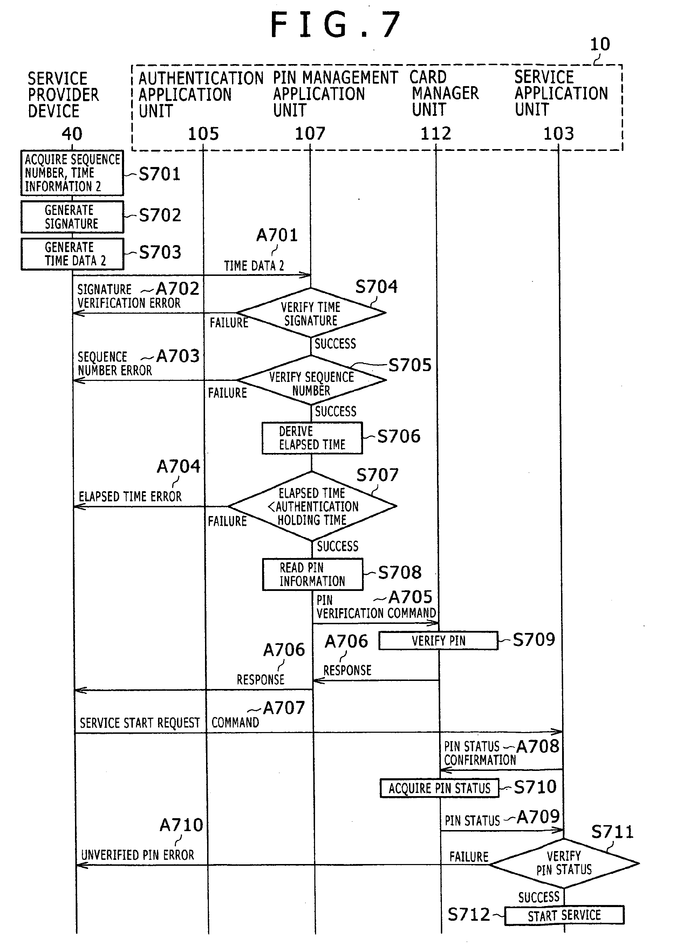

Next, a second embodiment will be described with reference to the flowcharts of Figs. 6 and 7.

This is an example that a function of managing the elapsed time from the authentication process is added to the PIN management application unit 105 in order to make the authentication process much safer. First, referring to Fig. 6, a description will be given of a first stage of a process using the time information and the like in the authentication process. Then referring to Fig. 7, a description will be given of verifications by the time information and the like as well as PIN verification.

In Fig 6, the service provider device 40 first performs an authentication request when desiring to perform an authentication process in the smart card (S601), and acquires a sequence number and time information 1 (S602). Here, the acquired time information may be a time inside the service provider device 40 or a time of an external server. The acquired sequence number may be a sequence number stored in the service provider device 40, or a random number and the like temporarily generated in the service provider device 40. It may also be possible to acquire a sequence number managed by an external server.

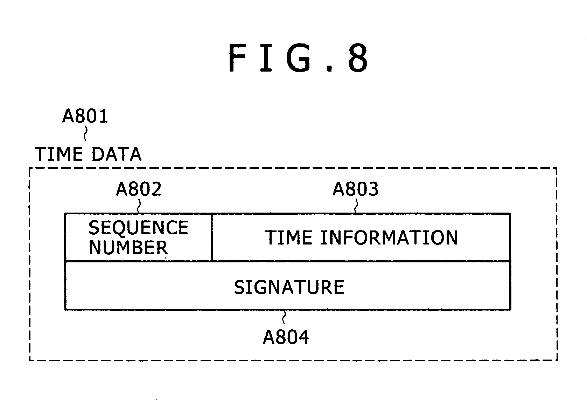

Next, the service provider device 40 generates a signature for the sequence number and time information 1 (S603). Here, the signature generation may be done in the service provider device 40 or may be relegated to an external server. Next, the service provider device 40 generates time data with a structure as shown in Fig. 8, using the sequence number, the time information 1, and the signature (S604).

Now the structure of time data shown in Fig. 8 will be described. In time data (A801), a sequence number (A802) indicating the order of the time data is located at the top followed by time information (A803). Finally, a signature is generated using a secret key for signature generation that is present in the key storage unit 403 of the service provider device 40 and in the key storage unit 503 of the card issuer device 50. The generated signature is added as a signature (A804).

The service provider device 40 transmits the authentication request command and time data 1 (A601) shown in Fig. 8 to the authentication application unit 105. Here, the authentication request command includes data of the authentication information to be necessary for performing biometric authentication or other authentication methods.

In the smart card 10, the authentication application unit 105 analyzes the received authentication request command, and performs an authentication process (S605). Here, the authentication process is a process by biometric authentication or other authentication methods. As a result of the authentication process, the authentication result and time data 1 (A602) is transmitted to the PIN management application unit 107.

The PIN management application unit 107 verifies the received authentication result (S606). As a result of the verification, when determining that the authentication is failed, the PIN management application unit 107 terminates the process by transmitting an authentication error (A603) to the service provider device 40 through the authentication application unit 105. On the other hand, when determining that the authentication is successful, the PIN management application unit 107 verifies the signature of the received time data (S607).

As a result of the verification of the signature, when determining that the signature is invalid, the PIN management application unit 107 terminates the process by transmitting a signature verification error (A604) to the service provider device 40 through the authentication application unit 105. On the other hand, when determining that the signature is valid, the PIN management application unit 107 stores the time information 1 and sequence number of the time data into the time information storage unit 109 (S608). Next, the PIN management application unit 107 transmits a response (A605) indicating completion of the process, to the service provider device 40 through the authentication application unit 105.

Next, referring to Fig. 7, a description will be given of a later stage process, namely, a process of verifications by time information and the like as well as PIN verification.

With this process, the elapsed time from the authentication process is managed relative to the PIN management application unit 105. Thus the authentication process can be made much safer.

In the following description it is assumed that the process represented by Fig. 6 has been completed.

First, the service provider device 40 acquires a sequence number and time information 2 (S701). Here, the acquired time information may be a time inside the service provider device 40 or a time of an external server. The sequence number is the sequence number acquired in S602 plus one. Next, the service provider device 40 generates a signature for the sequence number and time information 2 (S702). Here, the signature generation may be done in the service provider device 40 or may be relegated to an external server. Next, the service provider device 40 generates time data 2 with a structure as shown in Fig. 8, using the sequence number, the time information 2, and the signature (S703). Then, the service provider device 40 transmits the time data 2 (A701) to the PIN management application unit 107.

In the smart card 10, the PIN management application unit 107 verifies the signature of the received time data (S704). As a result of the verification, when determining that the signature is invalid, the PIN management application unit 107 terminates the process by transmitting a signature verification error (A702) to the service provider device 40. On the other hand, when determining that the signature is valid, the PIN management application unit 107 verifies the sequence number of the time data (S705).

As a result of the verification of the sequence number, when determining that the sequence number is invalid, the PIN management application unit 107 terminates the process by transmitting a sequence number error (A703) to the service provider device 40. On the other hand, when determining that the sequence number is valid, the PIN management application unit 107 derives an elapsed time from the time information 2 of the time data 2 and the time information 1 stored in the time information storage unit 109 (S706).

Next, the PIN management application unit 107 verifies the magnitude relation between the elapsed time and the authentication holding time stored in the authentication holding time storage unit 110 (S707). As a result of the verification, when determining that the elapsed time is longer than the authentication holding time, the PIN management application unit 107 terminates the process by transmitting an elapsed time error (A704) to the service provider device 40.

On the other hand, when determining that the elapsed time is shorter than the authentication holding time, the PIN management application unit 107 reads the PIN information stored in the PIN storage unit 108 (S708), and transmits a PIN verification command (A705) to the card manager unit 112. Here, the PIN verification command includes the PIN information read from the PIN storage unit 108.

The card manager unit 112 performs PIN verification by checking the PIN information of the received PIN verification command against the PIN information stored in the PIN storage unit 113 (S709). Then, the card manger unit 112 returns a response indicating completion of the process (A706) to the service provider device 40 through the PIN management application unit 107. Upon receiving the response, the service provider device 40 transmits a service start request command (A707) to the service application unit 103.

In the smart card 10, the service application unit 103 receives the service start request command (A707), and then transmits a PIN status confirmation command (A708) to the card manager unit 112. The card manager unit 112 analyzes the received PIN status confirmation command, and acquires a PIN status by referring to the PIN status storage unit 114 (S710). Then, the card manger unit 112 transmits the PIN status (A709) to the service application unit 103. The service application unit 103 verifies the received PIN status (S711).

As a result of the verification of the PIN status, when determining that the PIN is unverified, the service application unit 103 terminates the process by transmitting an unverified PIN error (A710) to the service provider device 40. On the other hand, when determining that the PIN is verified, the service application unit 103 starts the service (S712).

With the process as described above, when performing only the authentication request without performing the service start request, it is possible to eliminate a risk such that the PIN verification status is held in the card manager unit 112 for a long period of time against the intention of the user, as compared to the example described with reference to Fig. 5.

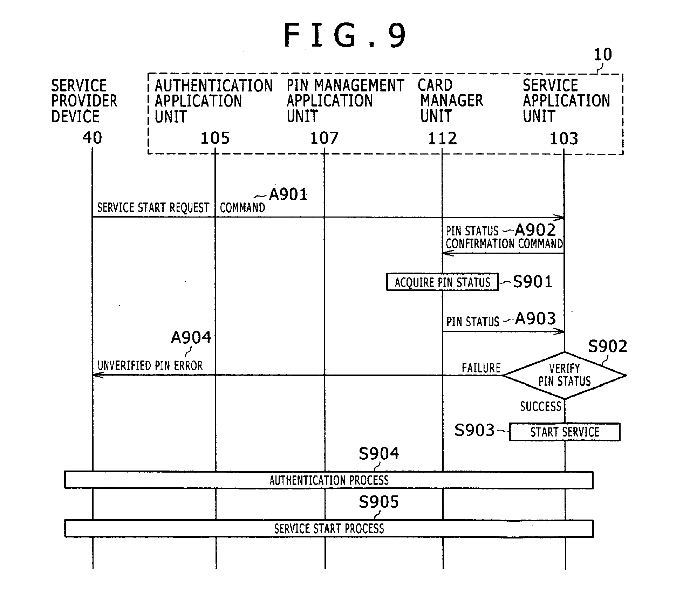

Next, a third embodiment will be described with reference to Fig. 9.

This example is a variation of the second embodiment according to Figs. 6 and 7. The example is that the service start request is performed prior to the authentication request.

First, the service provider device 40 transmits a service start request command (A901) to the service application unit 103 of the smart card 10. Upon receiving the service start request command (A901), the service application unit 103 transmits a PIN status confirmation command (A902) to the card manager unit 112.

Next, the card manager unit 112 analyzes the received PIN status confirmation command, and acquires a PIN status by referring to the PIN status storage unit 114 (S901). Then, the card manager unit 112 transmits the PIN status (A903) to the service application unit 103.

The service application unit 103 verifies the received PIN status (S902). As a result of the verification of the PIN status, when determining that the PIN is verified, the service application unit 103 starts the service (S903). On the other hand, when determining that the PIN is unverified, the service application unit 103 transmits an unverified PIN error (A904) to the service provider device 40.

The service provider device 40 sequentially performs an authentication process (S904) and a service start process (S905). The authentication process (S904), for example, is the authentication process (S502) shown in Fig. 5. The service start process (S905) is the process of the service start request command (A506) to start the service according to the authentication result.

Next, process operations for initializing the PIN management application unit 107 will be described with reference to Fig. 10.

First, the card issuer device 50 performs an initialization request (S1001), and transmits an initialization request command, authentication holding time data, and key data for signature verification (A1001) to the PIN management application unit 107 of the smart card 10.

In the smart card 10, the PIN application unit 107 generates a random number (S1002), and transmits a PIN setting command (A1002) to the card manger unit 112. Here, the PIN setting command includes the generated random number.

The card manager unit 112 analyzes the received PIN setting command, and performs a PIN setting (S1003). With this process, the random number generated by the PIN management application unit 107 is set to the PIN storage unit 113. Next, the card manager unit 112 transmits a PIN setting result (A1003) to the PIN management application unit 107.

[0054] Next, the PIN management application unit 107 verifies the received PIN setting result (S1004). As a result of the verification of the PIN setting result, when determining that the PIN setting is failed, the PIN management application unit 107 terminates the process by transmitting a PIN setting error (A1004) to the card issuer device 50.

On the other hand, when determining that the PIN setting is successful, the PIN management application unit 107 stores the random number generated in the step S1002 as PIN data (S1005) . Next the PIN management application unit 107 stores the authentication holding time data received from the card issuer device 50 into the authentication holding time storage unit 110 (S1006).

Next, the PIN management application unit 107 stores the key data for signature verification received from the card issuer device 50 into the key storage unit 111 (S1007), and returns a response indicating completion of the process (A1005) to the card issuer device 50.

With the process as described above, the PIN data is generated and stored in the smart card, so that the PIN data can be managed and used in a secure manner without being exposed to the outside of the smart card. Incidentally, this process may be performed when the PIN management application is mounted on the smart card, or after the application has been mounted on the smart card.

Although several embodiments have been described, the present invention is not limited to the above described embodiments, and various changes and modifications can be made within the spirit and scope of the present invention.

For example, in the example shown in Fig. 1, the smart card 10 has the plural service application units 103. However, the number of the service application units is not necessarily plural, but may be one.

Further, when the smart card includes the function of the terminal 20 and can connect to the network 30 by itself, the smart card 10 and the terminal 20 shown in Fig. 1 are expressed as a common medium or device. In addition, the use of the smart card is not necessarily limited to the use through the network 30 as shown in Fig. 1. There may be a case in which the smart card is used, for example, by being directly inserted into a server of a credit company.

Further, not only in the smart card 10 but also in the data carrier such as a storage medium or portable terminal carried by a user, the present invention can be applied to an example in which the service application is activated similarly based on the authentication and authentication result.

Further, from the above described embodiments, the present invention can be understood as the authentication system using the smart card or as the authentication in the smart card. However, from a different point of view, the present invention can also be understood as a service system for providing a service according to the authentication result of such a smart card.

## Claims

1. A data carrier used for receiving a service from a service provider device, comprising:
a PIN storage unit for storing PIN information prepared in advance with respect to the use of a service application;
an authentication information storage unit for storing information unique to a user;
an authentication application unit for authenticating the user by referring to the authentication information stored in the authentication information storage unit;
means for verifying the PIN information stored in the PIN storage unit according to the authentication result by the authentication application; and
a service application unit for performing the service according to the result of the verification of the PIN information by the verification means.

2. The data carrier according to claim 1,
wherein the authentication information storage unit stores the biometric information of the user, and
the authentication application unit performs an authentication process by referring to the biometric information.

3. The data carrier according to claim 1, including:
a plurality of service application units; and
a data storage unit for storing data to be used in the plurality of service applications.

4. The data carrier according to claim 1, further including a PIN management application unit having means for generating PIN information therein,
wherein the PIN storage unit stores the PIN information generated in the PIN management application unit.

5. The data carrier according to claim 4,
wherein the generation means of the PIN management application unit generates a random number and stores the generated random number into the PIN storage unit as PIN information.

6. An authentication system for providing a service by authenticating a user and by transmitting a command to a data carrier owned by the user, from a service provider device,
wherein the service provider device includes:
a communication unit for transmitting and receiving data;
a command generation unit for generating the command to be transmitted to the data carrier; and
a service provision unit for providing the service,
wherein the data carrier includes:
a PIN storage unit for storing PIN information prepared in advance with respect to the use of a service application;
a PIN management application unit for managing the PIN information;
an authentication information storage unit for storing information unique to the user;
an authentication application unit for authenticating the user by referring to the authentication information stored in the authentication information storage unit;
means for verifying the PIN information stored in the PIN storage unit according to the authentication result by the authentication application; and
a service application unit for performing the service according to the result of the verification of the PIN information by the verification means.

7. The authentication system according to claim 6,
wherein the service provider device transmits an authentication request command to the authentication application unit of the data carrier;
the authentication application unit performs an authentication process and transmits the authentication result to the PIN management application unit;
when determining that the authentication is successful from the received authentication result, the PIN management application unit reads the PIN information stored in the PIN storage unit, and verifies the PIN information stored in the PIN storage unit by the verification means;
the service provider device transmits a service start request to the service application unit; and
the service application unit verifies the PIN status and starts the service according to the verification result.

8. The authentication system according to claim 6,
wherein the authentication information storage unit stores the biometric information of the user, and
the authentication application unit performs the authentication process by referring to the biometric information.

9. The authentication system according to claim 6,
wherein the data carrier includes:
a plurality of service application units; and
a data storage unit for storing data to be used in the plurality of service applications.

10. The authentication system according to claim 6,
wherein the service provider device acquires first time information and transmits an authentication request command, the time information, and a sequence number to the authentication application unit,
the authentication application unit performs the authentication process, and transmits the authentication result as well as the time information to the PIN management application unit,
when determining that the authentication is successful from the received authentication result, the PIN management application unit stores the time information into the PIN management application unit,
the service provider device acquires second time information and transmits the second time information to the PIN management application unit,
the PIN management application unit derives the difference between the first time information and the second time information, and reads the PIN information stored in the PIN storage unit when determining that the time difference is smaller than the authentication holding time stored in the authentication holding time storage unit,
the verification means verifies the PIN information,
the service provider device transmits a service start request to the service application unit, and
the service application unit starts the service when determining that the PIN information is verified.

11. The authentication system according to claim 6,
wherein the data carrier includes a card manager unit having means for acquiring a PIN status stored therein, in addition to the verification means,
the service provider device transmits a service start request to the service application unit,
the service application unit transmits a PIN status confirmation command to the card manager unit,
the card manager unit acquires the PIN status stored therein and transmits the PIN status to the service application unit,
when determining that the received PIN status is verified, the service application unit starts the service,
when determining that the received PIN status is unverified, the service application unit transmits an unverified PIN error to the service provider device, and
the service provider device transmits an authentication request command to the authentication application unit.

12. The authentication system according to claim 6,
wherein in acquisition of the first time information, the service provider device adds a first sequence number indicating the order of the data into the first time information, and generates a signature for the combination of the first time information and the first sequence number,
the PIN management application unit verifies the received signature, and when determining that the signature is valid, stores the first time information and the first sequence number into a time information storage unit,
in acquisition of the second time information, the service provider device adds a second sequence number indicating the order of the data into the second time information, and generates a signature for the combination of the second time information and the second sequence number, and
the PIN management application unit verifies the received signature and second sequence number, and derives an elapsed time from the first and second time information when determining that the signature and the sequence number are valid.

13. The authentication system according to claim 6,
wherein the PIN management application unit notifies the authentication application unit and the service provider device of an error in the cases of:
determining that an authentication error occurs, as a result of the verification of the authentication result received from the authentication application unit;
determining that the signature is not valid, as a result of the verification of the signature of the first time information received from the authentication application unit;
determining that the signature is not valid, as a result of the verification of the signature of the second time information received from the service provider device;
determining that the sequence number received from the service provider device is not valid;
determining that the elapsed time derived from the first and second time information is longer than the holding time set in the authentication holding time storage unit; and
determining that a PIN setting error occurs, as a result of the verification of the PIN setting result received from the card manager unit.

14. A method for generating and managing PIN information used in a smart card by a card issuer device,
wherein the smart card includes:
a PIN storage unit for storing PIN information prepared in advance with respect to a service application;
a PIN management application unit having means for generating the PIN information, and managing the generated PIN information;
an authentication information storage unit for storing information unique to a user;
an authentication application unit for authenticating the user by referring to the authentication information stored in the authentication information storage unit;
means for verifying the PIN information stored in the PIN storage unit according to the authentication result by the authentication application; and
a service application unit for performing a service according to the result of the verification of the PIN information by the verification means,
wherein an initialization request command is transmitted to the PIN management application unit by the card issuer device,
the PIN management application unit generates PIN information by the generation means, and
when determining that the PIN information is properly set, the PIN management application unit stores the PIN information into the PIN storage unit.

15. The management method of PIN information according to claim 14,
wherein in transmission of the initialization request command to the PIN management application unit, the card issuer device transmits an authentication holding time for holding the authentication result in the PIN management application unit as well as key data to be used for verifying a signature in the PIN management application unit, and
the PIN management application unit stores the received authentication holding time into the authentication holding time storage unit, and stores the received key data into the key storage unit.

16. An authentication method for authenticating a user and allowing service provision according to the result of the authentication by use of the data carrier owned by the user, the authentication method comprising the steps of:
generating PIN information in the data carrier;
storing the generated PIN information into a storage unit;
authenticating the user by matching the authentication information of the particular user previously stored in the storage unit, when the service is used;
verifying the PIN information stored in the PIN storage unit when it is determined that the user is properly authenticated as a result of the authentication; and
allowing the service according to the result of the verification of the PIN information.

17. The authentication method according to claim 16,
wherein the authentication method uses the biometric information of the user as the authentication information and generates a random number as the PIN information.
